# EUROPÄISCHE PATENTSCHRIFT

(11) **EP 1 826 430 B1**
(45) Veröffentlichungstag und Bekanntmachung des Hinweises auf die Patenterteilung: **26.10.2011**
(21) Anmeldenummer: 07002019.3
(22) Anmeldetag: 31.01.2007
(51) Int. Cl.: F16D 13/75, F16D 28/00

(54) **Wipphebelaktor mit Nachstellvorrichtung**
Rocker level actuator with adjustment device
Actionneur de levier à ressort doté d'un dispositif de réglage

(30) Priorität: 24.02.2006 DE 102006008673
(43) Veröffentlichungstag der Anmeldung: 29.08.2007
(73) Patentinhaber: Schaeffler Technologies GmbH & Co. KG, 91074 Herzogenaurach (DE)
(72) Erfinder: Becht, Marco, 77815 Bühl (DE); Friedmann, Oswald, 77839 Lichtenau (DE)

(56) Entgegenhaltungen:
- EP-A1- 1 455 106
- EP-A1- 1 744 075
- EP-A2- 1 724 484
- DE-A1- 19 755 081
- FR-A1- 2 790 806
- GB-A- 2 309 761

## Beschreibung

Die vorliegende Erfindung betrifft einen Wipphebelaktor, der insbesondere zur Betätigung einer Kupplung eines Fahrzeuges vorgesehen ist, mit mindestens einem, eine veränderliche Betätigungskraft zum Öffnen und/oder Schließen der Kupplung ausübenden Wipphebel, der mittels einer Feder beaufschlagbar ist und ein Hebeldrehpunkt des Wipphebels mittels Verlagerung einer Laufrolle verlagerbar ist, an der der Wipphebel über eine geneigte Wipphebelkurve abgestützt ist. Dieser Art Wipphebelaktor ist z.B. aus EP 1 455 106 A1 bekannt.

Zur automatisierten Betätigung der Kupplung eines Fahrzeugs sind Hebelsysteme bekannt, die beispielsweise einen Hebel mit unveränderlicher Hebellänge besitzen und mittels eines elektromotorischen Aktuators zum Öffnen und/oder Schließen der Kupplung angetrieben werden. Bei dem Wipphebelaktor, der im Falle einer normal offenen Kupplung auch als Wipphebeleinrücker oder Hebeleinrücker bezeichnet wird, handelt es sich um eine durch einen Hebel gebildete Wippe, die mit veränderlichem Hebeldrehpunkt ausgestattet ist. An einem Ende des Hebels wirkt die Kraft einer Schraubenfeder mit einer Kraft-Weg-Kennlinie, die linear oder nicht linear ausgeführt sein kann und am anderen Ende wirkt die Betätigungskraft der Kupplung, die der von der Kupplung stammenden Kupplungskraft ein Gleichgewicht hält. Die Kupplungskraft weist dabei oft eine nicht-lineare Kraft-Weg-Kennlinie auf. Der Wipphebel besitzt eine geneigte Wipphebelkurve, über die auf die eindeutige Zuordnung zwischen einer Laufrolle bzw. deren Laufrollenposition und der Neigung des Wipphebels Einfluss genommen werden kann.

Darüber hinaus besitzt die Wipphebelkurve auch noch die Funktion, eine definierte Rückstellkraft auf die Laufrolle zu bewirken, sodass beispielsweise im Falle eines Stromausfalls die Laufrolle in Richtung zu einem dann nicht mehr angetriebenen Elektromotor zurück läuft und es so zu einem selbständigen Öffnen des Wipphebelaktors kommt. Die normal offene und vom Wipphebelaktor zur Momentenübertragung zugedrückte Kupplung geht dann in den offenen Zustand über.

Die nominale Betätigungskennlinie, also die Kraft-Weg-Kennlinie der Kupplung führt im Zusammenspiel mit dem Wipphebelaktor mit definierter Kraft-Weg-Kennlinie der den Wipphebel beaufschlagenden Federn und der Kontur der Wipphebelkurve zu einer definierten Betätigungskraft damit zur Verlagerung der Laufrolle. Diese Betätigungskraft wird beispielsweise über einen Kugelumlauftrieb oder ein anderes Getriebe zur Wandlung rotatorischer Bewegung in eine translatorische Bewegung in ein Betätigungsmoment gewandelt, welches beispielsweise von einem Elektromotor aufgebracht wird.

Kommt es beispielsweise aufgrund von Verschleiß der Reibbeläge der Kupplung zu einer Verschiebung der Betätigungskennlinie der Kupplung, so stellt sich am Wipphebelaktor eine neue Gleichgewichtslage des Wipphebels ein. Es kommt also zu einer Änderung der Neigung des Wipphebels gegenüber der nominal aus der Auslegungsrechnung vorgesehenen Neigung. Diese Veränderung der Neigung des Wipphebels führt aufgrund der geneigten Wipphebelkurve zu einer Veränderung der an der Laufrolle wirkenden Kraft und damit zu einem Ansteigen des erforderlichen Motormoments des Elektromotors zum Halten oder Bewegen der Laufrolle. Dieses veränderte Motormoment wiederum führt zu einer Zunahme der Leistungsaufnahme des Elektromotors und damit zu einem Temperaturanstieg.

Um nun dem ansteigenden Motormoment gerecht zu werden, ist ein entsprechend stärker dimensionierter Elektromotor erforderlich, der auch den höheren thermischen Belastungen standhält. Neben dem Kostenanstieg führt dies auch zu Nachteilen bezüglich des vom Elektromotor benötigten Bauraums und seiner Leistungsaufnahme. Ausgehend hiervon liegt der vorliegenden Erfindung nunmehr die Aufgabe zugrunde, einen Wipphebelaktor zu schaffen, der in der Lage ist, Veränderungen der Betätigungskennlinie der Kupplung mit geringer Betätigungskraft auszugleichen. Auch soll ein entsprechendes Verfahren der Betätigung einer Kupplung eines Fahrzeugs geschaffen werden.

Die Erfindung sieht zur Lösung dieser Aufgabe hinsichtlich des Wipphebelaktors eine Vorrichtung nach dem Gegenstand des Anspruchs 1 vor. Vorteilhafte Ausgestaltungen sind in den weiteren Ansprüchen beschrieben. Darüber hinaus sieht die Erfindung ein Verfahren nach dem Anspruch 11 vor und eine Ausführungsform hiervon ist im weiteren Anspruch beschrieben.

Die Erfindung schafft einen Wipphebelaktor, der insbesondere zur Betätigung einer Kupplung eines Fahrzeugs vorgesehen ist, mit mindestens einem, eine veränderliche Betätigungskraft zum Öffnen und/oder Schließen der Kupplung ausübenden Wipphebel, der mittels einer Feder mit einer Kraft beaufschlagbar ist und ein Hebeldrehpunkt des Wipphebels mittels Verlagerung einer Laufrolle verlagerbar ist, an der der Wipphebel über eine geneigte Wipphebelkurve abgestützt ist. Der Wipphebelaktor besitzt eine aktiv verstellbare Einrichtung zum Ausgleich einer verschleißbedingten Veränderung des Kraft-Weg-Verhaltens der Kupplung. Dies bedeutet, dass am Wipphebelaktor eine Einrichtung vorgesehen ist, mittels derer einer verschleißbedingten Veränderung des Kraft-Weg-Verhaltens der Kupplung Rechnung getragen wird.

Der Wipphebelaktor ermöglicht das Ein- und Ausrücken einer Kupplung mit einer im Vergleich zur Direktbetätigung niedrigeren Betätigungskraft. Voraussetzung hierfür aber ist, dass die Betätigungskennlinie der Kupplung jener Betätigungskennlinie entspricht, für die die Auslegung des Wipphebelaktors erfolgte. Bei einer Kennlinienverschiebung der Kupplung, die beispielsweise aufgrund von Belagverschleiß erfolgt, ändert sich dem gemäß die Betätigungskraft erheblich. Dies kann je nach der Richtung der Kennlinienverschiebung zur Folge haben, dass bei einer selbstöffnenden Auslegung des Wipphebelaktors die Selbstöffnung nicht mehr in dem der Auslegung entsprechenden Zustand erfolgt oder die Betätigungskraft das aus der Auslegung bekannte Maximum übersteigt.

Um diesem Problem gerecht zu werden, besitzt der erfindungsgemäße Wipphebelaktor eine aktiv verstellbare Einrichtung, die eine solche verschleißbedingte Veränderung des Kraft-Weg-Verhaltens der Kupplung ausgleicht. Damit erfolgt eine Nachstellung derart, dass auch bei einer beispielsweise aufgrund von Belagverschleiß eintretenden Veränderung der Kupplungskennlinie - die oft nicht-linearer Natur ist - vom Elektromotor des Wipphebelaktors ein Betätigungsmoment aufgebracht werden muss, welches weitgehend dem aus der Auslegung ermittelten Betätigungsmoment entspricht. Somit kommt es nicht aufgrund einer verschleißbedingten Veränderung der Kupplungskennlinie zu einer auslegungswidrigen Belastung des Elektromotors.

Es ist nach der Erfindung vorgesehen, dass es sich bei der Einrichtung um ein am kupplungsseitigen Ende des Wipphebels angeordnetes Nachstellkeilpaar handelt, mit dem ein Kupplungslager beaufschlagbar ist, wobei Auflagerflächen des Nachstellkeilpaars relativ zu einer Längsachse des Wipphebels in der Höhe verstellbar sind. Der Wipphebel des erfindungsgemäßen Wipphebelaktors beaufschlagt daher das Kupplungslager (als Kupplungsausrücklager bezeichnet) über die Auflagerflächen eines Nachstellkeilpaars, deren Höhe relativ zur Längsachse des Wipphebels in der Höhe verstellbar ist. Kommt es beispielsweise zu einem Belagverschleiß einer aktiv zugedrückten Kupplung, so würde dies bei einem bekannten Wipphebelaktor zu einer zu geringen Anpresskraft der Kupplung im voll geschlossenen Zustand führen, was anhand des Kupplungsschlupfs erkennbar wäre. Der Elektromotor eines bekannten Wipphebelaktors müsste daraufhin den Wipphebel in seiner Höhe insgesamt anheben und zu diesem Zweck die Laufrolle an der geneigten Wipphebelkurve verlagern. Dies führt aber zu einer Zunahme der Rückstellkraft aufgrund der geneigten Wipphebelkurve und in der Folge einerseits zu einem vom Elektromotor zu erbringenden Betätigungsmoment, welches nicht mehr dem aus der Auslegung bekannten Betätigungsmoment entspricht und andererseits damit zu einer erhöhten thermischen Belastung des Elektromotors.

Durch die Veränderung der Höhe der Auflagerflächen des Nachstellkeilpaars relativ zur Längsachse des Wipphebels kann diese verschleißbedingte Veränderung des Kraft-Weg-Verhaltens der Kupplung ausgeglichen werden.

Um diese Höhenveränderung der Auflagerflächen relativ zur Längsachse des Wipphebels herbeizuführen, ist nach der vorliegenden Erfindung vorgesehen, dass der Wipphebel an seinem dem Nachstellkeilpaar zugeordneten Bereich und/oder das Nachstellkeilpaar an seinem dem Wipphebel zugeordneten Bereich eine Rampenfläche besitzt, was zu einer Verlagerung des Nachstellkeilpaars relativ zum Wipphebel und damit zu einer Höhenveränderung der Auflagerflächen relativ zur Längsachse des Wipphebels an der Rampenfläche führt. Die Rampenfläche kann am Wipphebel oder auch am Nachstellkeilpaar vorgesehen sein, wobei nach einer bevorzugten Ausführungsform die Rampenfläche am Wipphebel vorgesehen ist und somit die beiden Nachstellkeile durch eine Verlagerung relativ zum Wipphebel eine Höhenveränderung entlang der Rampenfläche erfahren. Damit erfahren die Auflagerflächen der beiden Nachstellkeile relativ zur Längsachse des Wipphebels eine Höhenveränderung und somit wird ein Nachstellvorgang durchgeführt.

Die Verlagerungsbewegung der beiden Nachstellkeile an der Rampenfläche des Wipphebels wird nach der vorliegenden Erfindung durch eine drehbare Stellspindel herbeigeführt, deren Verdrehung zu einer Verlagerungsbewegung der beiden Nachstellkeile an der Rampenfläche führt.

Um nun diese Verdrehung der Stellspindel zu erreichen, ist nach der Erfindung vorgesehen, dass an der Stellspindel drehfest ein Mitnehmerrad mit am Außenumfang insbesondere gleichwinkelig verteilten Eingriffsvertiefungen angeordnet ist, die zum Dreheingriff mit relativ zum Wipphebel axial verlagerbaren Betätigungslaschen vorgesehen sind. Das bedeutet, dass eine Verlagerungsbewegung der Betätigungslaschen zu einem Verdrehen der Stellspindel über die am Mitnehmerrad außen gleichwinkelig verteilt angebrachten Eingriffsvertiefungen führt. Diese Drehbewegung des Mitnehmerrads, welches drehfest an der Stellspindel angeordnet ist, führt zu einer Verdrehung der Stellspindel und diese Verdrehung wiederum zu einer Höhenveränderung der Auflagerflächen der beiden Nachstellkeile relativ zur Längsachse des Wipphebels.

Die vorstehend genannten Betätigungslaschen sind nach einer Weiterbildung der Erfindung an einem relativ zum Wipphebel mittels eines Antriebs axial verlagerbaren Mitnehmerblech vorgesehen, sodass die Verlagerung des Mitnehmerblechs letztlich zu einer Verdrehung der Stellspindel führt und damit wiederum zu einer Verlagerung der beiden Nachstellkeile an der Rampenfläche relativ zum Wipphebel.

Bei der verschleißbedingten Veränderung des Kraft-Weg-Verhaltens der Kupplung handelt es sich zwar um einen stetigen, aber langsam ablaufenden Vorgang, sodass eine entsprechende Nachstellbewegung der beiden Nachstellkeile nur gelegentlich erforderlich ist, während die bestimmungsgemäße Betätigung der Kupplung durch den Wipphebelaktor ein ständig wiederkehrender Vorgang ist. Da der Antrieb zur Verlagerung der Nachstellkeile der gleiche Antrieb ist, der auch zur Betätigung des Wipphebels vorgesehen ist, nämlich beispielsweise der bereits vorstehend angesprochene Elektromotor, ist es nach der vorliegenden Erfindung vorgesehen, dass das Mitnehmerblech während der "normalen" Verfahrbewegung der Laufrolle nicht verschoben wird, sondern das Mitnehmerblech mittels des Antriebs zu einem die Verlagerungsbewegung der Laufrolle in beide Verlagerungsrichtungen überschreitenden Überweg betätigbar ist. Der Dreheingriff der Betätigungslaschen mit dem Mitnehmerrad findet im Bereich des Überwegs statt, sodass eine Verfahrbewegung einer die Laufrolle abstützenden Traverse in einen den "normalen" Verfahrweg überschreitenden Überweg notwendig ist, um einen Nachstellvorgang durchzuführen. Dieser Überweg kann durch den Antrieb in beide Verlagerungsrichtungen der Laufrolle stattfinden, sodass es am Nachstellkeilpaar zu einer positiven Höhenveränderung der Auflagerflächen relativ zur Längsachse des Wipphebels kommt oder auch zu einer negativen Höhenveränderung; also einer Reduzierung der Höhe der Auflagerflächen oberhalb der Längsachse des Wipphebels.

Dies ist insbesondere bei einer ein Belagverschleißausgleichssystem aufweisenden Kupplung von Vorteil. Bei einer solchen Kupplung findet ein Nachstellen der Kupplungskinematik erst nach dem Erkennen eines deutlichen Belagverschleißes statt, während der Nachstellvorgang durch den erfindungsgemäßen Wipphebelaktor auch bei bereits deutlich kleinerem Belagverschleiß stattfindet. Hat nun mittels des Wipphebelaktors ein derartiges Nachstellen zum Ausgleich der verschleißbedingten Veränderung des Kraft-Weg-Verhaltens der Kupplung stattgefunden und ist dieser Vorgang bereits beispielsweise mehrfach durchgeführt worden, so führt das Belagverschleißausgleichssystem der Kupplung nach einem entsprechenden Feststellen eines Belagverschleißes einen eigenständigen Nachstellschritt durch, sodass die mehreren Nachstellschritte des Wipphebelaktors rückgängig gemacht werden müssen. Zu diesem Zweck kann das Mitnehmerblech mittels des Antriebs in beide Verlagerungsrichtungen der Laufrolle verlagert werden. Aus diesem Grund ist nach der Erfindung vorgesehen, dass am Mitnehmerblech Betätigungslaschen angeordnet sind zum Dreheingriff mit dem Mitnehmerrad, wodurch eine positive und negative Höhenveränderung der Auflagerflächen relativ zur Längsachse des Wipphebels erreicht wird.

Nach einer Weiterbildung der Erfindung ist vorgesehen, dass die Stellspindel ein selbsthemmendes Außengewinde aufweist, sodass eine Betätigungskraft der Kupplung die Stellspindel nicht in Drehung versetzt und die Rampenflächen zwischen dem Nachstellkeilpaar und dem Wipphebel ohne Selbsthemmung ausgebildet ist. Damit haben die Nachstellkeile zwar die Tendenz, sich unter Einwirkung der Betätigungskraft der Kupplung zu öffnen, das selbsthemmende Gewinde an der Stellspindel, welches sich mit entsprechenden Muttern im Eingriff befindet, führt aber dazu, dass die Nachstellkeile keine Öffnungsbewegung durchführen können.

Nach einer Modifikation hierzu ist es vorgesehen, dass die Rampenfläche zwischen dem Nachstellkeilpaar und dem Wipphebel selbsthemmend ausgebildet ist und die Stellspindel zur aktiven Höhenverstellung der Auflagerflächen in beide Richtungen relativ zur Längsachse des Wipphebels bewegbar ist.

Bei einer nicht selbsthemmenden Ausbildung der Rampenfläche zwischen dem Nachstellkeilpaar und dem Wipphebel führt die von der Kupplung ausgehende Rückstellkraft dazu, dass das sich mit der Kupplung im ständigen Eingriff befindende Nachstellkeilpaar rückgestellt wird, wenn die Stellspindel vom Mitnehmerblech über die Betätigungslasche entsprechend verdreht wird. Mit der Stellspindel sich in Eingriff befindende Muttern müssen aber nicht zur Kraftübertragung in beide Richtungen ausgebildet sein. Anders verhält es sich dann, wenn eine Rückstellbewegung der Nachstellkeile durch die Stellspindel aktiv herbeigeführt werden soll; also bei einer selbsthemmenden Auslegung der Rampenfläche zwischen Nachstellkeilpaar und Wipphebel.

Die Erfindung schafft auch ein Verfahren der Betätigung einer Kupplung eines Fahrzeugs mittels eines Wipphebelaktors mit mindestens einem, eine veränderliche Betätigungskraft zum Öffnen und/oder Schließen der Kupplung ausübenden Wipphebel, der mittels einer Feder beaufschlagbar ist und ein Hebeldrehpunkt des Wipphebels mittels Verlagerung einer Laufrolle verlagerbar ist, an der der Wipphebel über eine geneigte Wipphebelkurve abgestützt ist. Nach dem Verfahren wird eine verschleißbedingte Veränderung des Kraft-Weg-Verhaltens der Kupplung durch eine Veränderung des Betätigungswegs einer die Kupplung beaufschlagenden Einrichtung ausgeglichen. Zu diesem Zweck wird beispielsweise mittels einer aktiven Messung einer Regelungsgröße, wie beispielsweise des Motorstroms, der Motortemperatur, der an der Traverse der Laufrolle wirkenden Kraft oder des Betätigungsmoments an der Motorspindel des Elektromotors, ein Nachstellvorgang ausgelöst, wenn durch die Messung ein Überschreiten vorbestimmter Schwellenwerte der genannten Regelungsgrößen erkannt wird.

Wenn eine Kupplung mit einem Belagverschleißausgleichssystem durch den erfindungsgemäßen Wipphebelaktor betätigt wird, so ist nach einer Ausführungsform des erfindungsgemäßern Verfahrens vorgesehen, dass ein Nachstellen der Belagverschleißausgleichsvorrichtung der Kupplung erkannt und mittels einer Veränderung des Betätigungswegs ausgeglichen wird.

Die Erfindung wird nunmehr im Folgenden anhand der Zeichnung näher erläutert.
Es zeigen:
Fig. 1 eine perspektivische Darstellung eines Wipphebelaktors nach einer Ausführungsform gemäß der vorliegenden Erfindung; und
Fig. 2 eine perspektivische Ansicht des Wipphebelaktors nach Fig. 1 in einer Längsschnittansicht.

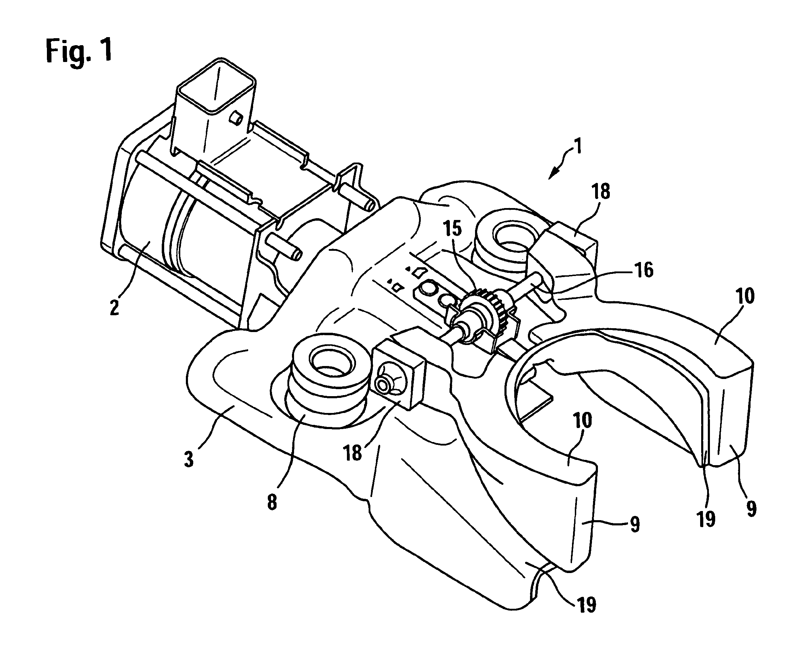

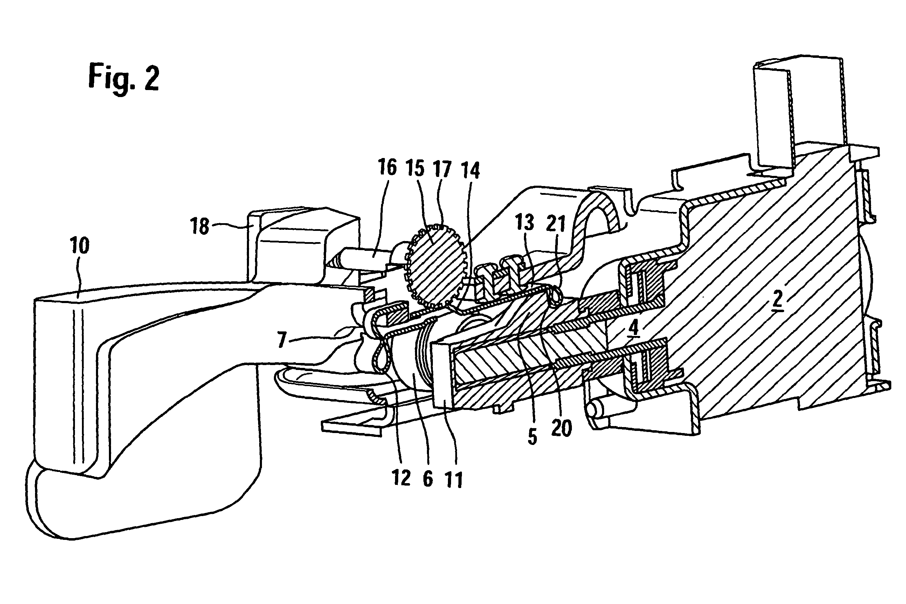

Fig. 1 der Zeichnung zeigt einen Wipphebelaktor 1 gemäß einer Ausführungsform nach der vorliegenden Erfindung. Der dargestellte Wipphebelaktor 1 dient zur Betätigung einer nicht näher dargestellten Kupplung vom Typ normal offen, da mittels des Wipphebelaktors zugedrückt, d. h. geschlossen wird. Es versteht sich, dass der Wipphebelaktor auch für im kraftfreien Zustand geschlossene Kupplungen vorteilhaft sein kann. Wenn nun mit der Kupplung eine Momentenübertragung stattfinden soll, wird die Kupplung durch den Wipphebelaktor 1 zugedrückt. Der Wipphebelaktor 1 weist einen Elektromotor 2 mit einer näher anhand von Fig. 2 ersichtlichen Spindel 4 mit einem Getriebe zur Wandlung einer rotatorischen Bewegung in eine translatorische Bewegung auf. Über die durch die Spindel 4 induzierte translatorische Bewegung wird eine Traverse 5 in eine translatorische Bewegung versetzt, die wiederum zu einer Drehbewegung einer Laufrolle 6 führt, an der der Wipphebel 3 abgestützt ist. Der Wipphebel 3 weist an seiner der Laufrolle 6 zugewandten Unterseite eine geneigte und/oder gekrümmte Wipphebelkurve 7 auf, entlang der die Laufrolle 6 zur Veränderung des Drehpunkts des Wipphebels 3 eine Abrollbewegung ausführt.

Über Schraubenfedern 8 wird der Wipphebel 3 so beaufschlagt, dass es aufgrund der Verlagerung der Laufrolle 6 entlang der Wipphebelkurve 7 zu einer veränderlichen Betätigungskraft kupplungsseitig kommt - also im Bereich eines Nachstellkeilpaars 9. Das Nachstellkeilpaar 9 kann nun über Auflagerflächen 10 ein Kupplungslager direkt oder unter Zwischenschaltung weiterer Bauteile beaufschlagen.

Kommt es beispielsweise aufgrund längerer Betriebszeit des mit der Kupplung ausgestatteten Fahrzeugs zu einem Belagverschleiß, so verändert sich die Kupplungskennlinie der Kupplung. Diese Veränderung der Kupplungskennlinie führt zu einer Änderung der Neigung des Wipphebels 3 im Vergleich zu der Neigung, die sich aufgrund der nominalen Betätigungskennlinie der Kupplung einstellt. Es kommt zu einer neuen Gleichgewichtslage des Wipphebels 3, beispielsweise einer gegenüber der anhand der nominalen Betätigungskennlinie der Kupplung abweichenden Winkelstellung. Dies führt zu einer stärkeren Rückstellkraft, die vom Elektromotor 2 aufgenommen werden muss.

Dieses gegenüber der Auslegung veränderte Betätigungsmoment des Elektromotors führt zu einer erhöhten Stromaufnahme, sodass durch einen Soll-Ist-Vergleich des hier nur beispielshalber genannten Motorstroms erkannt wird, dass das Kraft-Weg-Verhalten der Kupplung eine Veränderung erfahren hat.

Ein solcher Vergleich kann beispielsweise von einem Kupplungssteuergerät durchgeführt werden und zu einem Nachstellvorgang führen. Um einen solchen Nachstellvorgang einzuleiten, wird der Elektromotor 2 vom Kupplungssteuergerät so angesteuert, dass die Traverse 5 in den Bereich eines über den normalen Betätigungsweg der Traverse 5 hinaus sich erstreckenden Überweg geführt wird.

Zu diesem Zweck wird die Traverse 5 nach Fig. 2 soweit in Richtung zur Stirnseite der Nachstellkeile 9 bewegt, bis eine vordere Stirnfläche 11 der Traverse 5 mit einer Fläche 12 eines Mitnehmerblechs 13 in Kontakt gelangt. Eine weitere Bestromung des Elektromotors 2 führt zu einer weiteren Vorwärtsbewegung der Traverse 5 und damit des Mitnehmerblechs 13. An der Oberseite des Mitnehmerblechs sind Betätigungslaschen 14 vorgesehen, die in Eingriff mit Eingriffsvertiefungen 17 gelangen können, die am Außenumfang eines Mitnehmerrads 15 einer Stellspindel 16 angeordnet sind.

Die daraus resultierende Drehbewegung des Mitnehmerrads 15 um einen vorbestimmten Drehwinkel führt zu einer Verdrehung der Stellspindel, die beidseits in Muttern 18 aufgenommen ist. Die Muttern 18 sind relativ zu den Nachstellkeilen 9 drehfest angeordnet, sodass eine entsprechende Drehung der Stellspindel 16 dazu führt, dass die Nachstellkeile 9 an den an der Oberseite des Wipphebels 3 ausgebildeten Rampenflächen 19 verlagert werden. Die Rampenflächen 19 sind im Winkel ausgebildet, sodass eine Verlagerungsbewegung der Nachstellkeile 9 relativ zum Wipphebel 3 in Richtung nach außen gerichtet zu einer Zunahme der Höhe der Auflagerflächen 10 relativ zur Längsachse des Wipphebelaktors 1 führt.

Wird der Elektromotor so angesteuert, das er eine Umkehrbewegung durchführt, führt dies zu einer Bewegung der Traverse 5 in die entgegengesetzte Richtung, bis eine hintere Stirnfläche 20 der Traverse mit einer Fläche 21 des Mitnehmerblechs 13 in Kontakt gelangt und das Mitnehmerblech relativ zum Wipphebel 3 in Richtung zum Elektromotor 2 hin verlagert wird. Dabei gelangt die Betätigungslasche 14 außer Eingriff mit der Eingriffsvertiefung 17 am Mitnehmerrad 15 und rückt eine Eingriffsvertiefung weiter wieder ein. Damit ist ein Nachstellvorgang abgeschlossen und durch eine Wiederholung eines solchen Nachstellvorgangs kann eine weitere Höhenveränderung der Auflagerflächen 10 relativ zur Längsachse des Wipphebelaktors 1 durchgeführt werden.

Steht der Wipphebelaktor 1 in Kontakt mit einer Kupplung, die über ein Belagverschleißausgleichssystem verfügt, müssen die vom Wipphebelaktor durchgeführten Nachstellschritte nach einem entsprechenden Nachstellschritt des Belagverschleißausgleichssystems der Kupplung rückgängig gemacht werden. Zu diesem Zweck wird nach Auswertung einer entsprechenden Regelungskenngröße ein aktiver Rückstellschritt eingeleitet. Dabei wird die Traverse 5 in die Richtung zum Elektromotor 2 hin in einen Überweg verfahren und eine Betätigungslasche des Mitnehmerblechs 13 kommt mit einer Eingriffsvertiefung 17 des Mitnehmerrads 15 in Eingriff und verdreht dieses in die entgegengesetzte Richtung. Aufgrund der von der Kupplung ständig induzierten Rückstellkraft führt dies zu einem Absenken der Auflageflächen 10 relativ zur Längsachse des Wipphebelaktors 1. Die Nachstellkeile 9 bewegen sich im Bereich der Stellspindel 16 in Richtung nach außen und fahren an den Rampenflächen 19 des Wipphebels 3 nach unten, sodass daraus eine entsprechende Höhenverringerung der Auflagerflächen 10 relativ zur Längsachse des Wipphebelaktors resultiert.

Eine darauf erfolgende verschleißbedingte Veränderung des Kraft-Weg-Verhaltens der Kupplung kann durch einen nachfolgenden Nachstellschritt des Wipphebelaktors 1 ausgeblichen werden.

### Bezugszeichenliste

- 1: Wipphebelaktor
- 2: Elektromotor
- 3: Wipphebel
- 4: Spindel
- 5: Traverse
- 6: Laufrolle
- 7: geneigte/gekrümmte Wipphebelkurve
- 8: Schraubenfedern
- 9: Nachstellkeilpaar
- 10: Auflageflächen
- 11: Stirnfläche
- 12: Fläche
- 13: Mitnehmerblech
- 14: Betätigungslasche
- 15: Mitnehmerrad
- 16: Stellspindel
- 17: Eingriffsvertiefungen
- 18: Muttern
- 19: Rampenfläche
- 20: hintere Stirnfläche
- 21: Fläche

## Patentansprüche

1. Wipphebelaktor (1), insbesondere zur Betätigung einer Kupplung eines Fahrzeuges, mit mindestens einem, eine veränderliche Betätigungskraft zum Öffnen und/oder Schließen der Kupplung ausübenden Wipphebel (3), der mittels einer Feder (8) mit Kraft beaufschlagbar ist und ein Hebeldrehpunkt des Wipphebels (3) mittels Verlagerung einer Laufrolle (6) verlagerbar ist, an der der Wipphebel (3) über eine geneigte Wipphebelkurve (7) abgestützt ist, **dadurch gekennzeichnet, dass** der Wipphebelaktor (1) eine aktiv verstellbare Einrichtung besitzt zum Ausgleich einer verschleißbedingten Veränderung des Kraft-Weg-Verhaltens der Kupplung.

2. Wipphebelaktor (1) nach Anspruch 1, **dadurch gekennzeichnet, dass** die Einrichtung ein am kupplungsseitigen Ende des Wipphebels (3) angeordnetes Nachstellkeilpaar (9) umfasst mit dem ein Kupplungslager mit Kraft beaufschlagbar ist, wobei Auflagerflächen (10) des Nachstellkeilpaars (9) relativ zu einer Längsachse des Wipphebels (3) in der Höhe verstellbar sind.

3. Wipphebelaktor (1) nach Anspruch 2, **dadurch gekennzeichnet, dass** der Wipphebel (3) an seinem dem Nachstellkeilpaar (9) zugeordneten Bereich und/oder das Nachstellkeilpaar (9) an seinem dem Wipphebel (3) zugeordneten Bereich eine Rampenfläche (19) besitzt, sodass eine Verlagerung des Nachstellkeilpaars (9) relativ zum Wipphebel (3) zu einer Höhenveränderung der Auflagerflächen (10) relativ zur Längsachse des Wipphebels (3) an der Rampenfläche (19) führt.

4. Wipphebelaktor (1) nach Anspruch 2 oder 3, **dadurch gekennzeichnet, dass** das Nachstellkeilpaar (9) mittels einer drehbaren Stellspindel (16) relativ zum Wipphebel (3) verlagerbar ist.

5. Wipphebelaktor (1) nach Anspruch 4, **dadurch gekennzeichnet, dass** an der Stellspindel (16) drehfest ein Mitnehmerrad (15) mit am Außenumfang gleichwinkelig verteilten Eingriffsvertiefungen (17) angeordnet ist, die zum Dreheingriff mit relativ zum Wipphebel (3) axial verlagerbaren Betätigungslaschen (14) vorgesehen sind.

6. Wipphebelaktor (1) nach Anspruch 5, **dadurch gekennzeichnet, dass** die Betätigungslaschen (14) an einem relativ zum Wipphebel (3) mittels eines Antriebs (2) axial verlagerbaren Mitnehmerblech (13) angeordnet sind, sodass die Verlagerung des Mitnehmerblechs (13) zu einer Verdrehung der Stellspindel (16) führt.

7. Wipphebelaktor (1) nach Anspruch 6, **dadurch gekennzeichnet, dass** das Mitnehmerblech (13) mittels des Antriebs (2) zu einem die Verlagerungsbewegung der Laufrolle (6) in beide Verlagerungsrichtungen überschreitenden Überweg betätigbar ist und der Dreheingriff der Betätigungslaschen (14) mit dem Mitnehmerrad (15) im Bereich des Überwegs stattfindet.

8. Wipphebelaktor (1) nach Anspruch 6 oder 7, **dadurch gekennzeichnet, dass** am Mitnehmerblech (13) Betätigungslaschen (14) zum Dreheingriff mit dem Mitnehmerrad (15) zur Herbeiführung einer positiven und negativen Höhenveränderung der Auflagerflächen (10) relativ zur Längsachse des Wipphebels (3) vorgesehen sind.

9. Wipphebelaktor (1) nach Anspruch 4, **dadurch gekennzeichnet, dass** die Stellspindel (16) ein selbsthemmendes Außengewinde aufweist, dass eine Betätigungskraft der Kupplung die Stellspindel (16) nicht in Drehung versetzt und die Rampenfläche (19) zwischen Nachstellkeilpaar (9) und Wipphebel (3) ohne Selbsthemmung ausgebildet ist.

10. Wipphebelaktor (1) nach den Ansprüchen 3 und 4, **dadurch gekennzeichnet, dass** die Rampenfläche (19) zwischen Nachstellkeilpaar (9) und Wipphebel (3) selbsthemmend ausgebildet ist und die Stellspindel (16) zur aktiven Höhenveränderung der Auflagerflächen (10) in beide Richtungen relativ zur Längsachse des Wipphebels (3) bewegbar ist.

11. Verfahren der Betätigung einer Kupplung eines Fahrzeuges mittels eines Wipphebelaktors (1) mit mindestens einem, eine veränderliche Betätigungskraft zum Öffnen und/oder Schließen der Kupplung ausübenden Wipphebel (3), der mittels einer Feder (8) mit Kraft beaufschlagbar ist und ein Hebeldrehpunkt des Wipphebels (3) mittels Verlagerung einer Laufrolle (6) verlagerbar ist, an der der Wipphebel (3) über eine geneigte Wipphebelkurve (7) abgestützt ist, **dadurch gekennzeichnet, dass** eine verschleißbedingte Veränderung des Kraft-Weg-Verhaltens der Kupplung durch eine Veränderung des Betätigungswegs einer die Kupplung beaufschlagenden Einrichtung ausgeglichen wird.

12. Verfahren nach Anspruch 11, **dadurch gekennzeichnet, dass** mittels einer Software ein Nachstellen einer Belagverschleißausgleichsvorrichtung der Kupplung erkannt und die gelieferten Werte mit den in der Software hinterlegten Grenzwerten verglichen werden.

## Claims

1. Rocker lever actuator (1), in particular for actuating a clutch of a vehicle, having at least one rocker lever (3) which imparts a variable actuating force for opening and/or closing the clutch and which can be loaded with force by means of a spring (8), and a lever pivot point of the rocker lever (3) can be displaced by means of a displacement of a running roller (6) on which the rocker lever (3) is supported via an inclined rocker lever cam (7), **characterized in that** the rocker lever actuator (1) has an actively adjustable device for compensating for a wear-induced change in the force-travel characteristic of the clutch.

2. Rocker lever actuator (1) according to Claim 1, **characterized in that** the device comprises an adjusting wedge pair (9) which is arranged on the clutch-side end of the rocker lever (3) and by means of which a clutch bearing can be loaded with force, wherein support surfaces (10) of the adjusting wedge pair (9) can be adjusted in height relative to a longitudinal axis of the rocker lever (3).

3. Rocker lever actuator (1) according to Claim 2, **characterized in that** the rocker lever (3), on its region assigned to the adjusting wedge pair (9), and/or the adjusting wedge pair (9), on its region assigned to the rocker lever (3), have/has a ramp surface (19) such that a displacement of the adjusting wedge pair (9) relative to the rocker lever (3) leads to a change in height of the support surfaces (10) relative to the longitudinal axis of the rocker lever (3) at the ramp surface (19).

4. Rocker lever actuator (1) according to Claim 2 or 3, **characterized in that** the adjusting wedge pair (9) can be displaced relative to the rocker lever (3) by means of a rotatable adjusting spindle (16).

5. Rocker lever actuator (1) according to Claim 4, **characterized in that** a driver wheel (15) with engagement depressions (17) distributed at uniform angular intervals on the outer circumference is arranged on the adjusting spindle (16) for conjoint rotation therewith, which engagement depressions are provided for rotational engagement with actuating lugs (14) which are axially displaceable relative to the rocker lever (3).

6. Rocker lever actuator (1) according to Claim 5, **characterized in that** the actuating lugs (14) are arranged on a driver plate (13) which can be displaced axially relative to the rocker lever (3) by means of a drive (2), such that the displacement of the driver plate (13) leads to a rotation of the adjusting spindle (16).

7. Rocker lever actuator (1) according to Claim 6, **characterized in that** the driver plate (13) can be actuated by means of the drive (2) to perform an overtravel which exceeds the displacement movement of the running roller (6) in both displacement directions, and the rotational engagement of the actuating lugs (14) with the driver wheel (15) takes place in the region of the overtravel.

8. Rocker lever actuator (1) according to Claim 6 or 7, **characterized in that** actuating lugs (14) for rotational engagement with the driver wheel (15) in order to effect a positive and negative change in height of the support surfaces (10) relative to the longitudinal axis of the rocker lever (3) are provided on the driver plate (13).

9. Rocker lever actuator (1) according to Claim 4, **characterized in that** the adjusting spindle (16) has a self-locking external thread, **in that** an actuating force of the clutch does not set the adjusting spindle (16) in rotation, and the ramp surface (19) between the adjusting wedge pair (9) and the rocker lever (3) is formed without a self-locking capability.

10. Rocker lever actuator (1) according to Claims 3 and 4, **characterized in that** the ramp surface (19) between the adjusting wedge pair (9) and the rocker lever (3) is of self-locking design and the adjusting spindle (16) can be moved in order to effect the active change in height of the support surfaces (10) in both directions relative to the longitudinal axis of the rocker lever (3).

11. Method for actuating a clutch of a vehicle by means of a rocker lever actuator (1), having at least one rocker lever (3) which imparts a variable actuating force for opening and/or closing the clutch and which can be loaded with force by means of a spring (8), and a lever pivot point of the rocker lever (3) can be displaced by means of a displacement of a running roller (6) on which the rocker lever (3) is supported via an inclined rocker lever cam (7), **characterized in that** a wear-induced change in the force-travel characteristic of the clutch is compensated for by a change in the actuating travel of a device which acts on the clutch.

12. Method according to Claim 11, **characterized in that**, by means of software, an adjustment of a lining wear compensation device of the clutch is detected and the values output are compared with the limit values stored in the software.

## Revendications

1. Actionneur à levier basculant (1), notamment pour actionner un embrayage d'un véhicule, comprenant au moins un levier basculant (3) qui exerce une force d'actionnement variable pour ouvrir et/ou fermer l'embrayage, lequel peut être sollicité par une force au moyen d'un ressort (8) et un point de rotation du levier basculant (3) peut être déplacé en déplaçant un galet de roulement (6) sur lequel le levier basculant (3) est supporté par le biais d'une came de levier basculant inclinée (7), **caractérisé en ce que** l'actionneur à levier basculant (1) possède un dispositif réglable activement pour la compensation d'une variation due à l'usure du comportement force-déplacement de l'embrayage.

2. Actionneur à levier basculant (1) selon la revendication 1, **caractérisé en ce que** le dispositif comprend une paire de clavettes de réglage (9) disposée sur l'extrémité du côté de l'embrayage du levier basculant (3), avec laquelle un palier d'embrayage peut être sollicité par une force, des surfaces d'appui (10) de la paire de clavettes de réglage (9) pouvant être déplacées en hauteur par rapport à un axe longitudinal du levier basculant (3).

3. Actionneur à levier basculant (1) selon la revendication 2, **caractérisé en ce que** le levier basculant (3) possède, au niveau de sa région associée à la paire de clavettes de réglage (9), et/ou la paire de clavettes de réglage (9) possède, au niveau de sa région associée au levier basculant (3), une surface en rampe (19) de telle sorte qu'un déplacement de la paire de clavettes de réglage (9) par rapport au levier basculant (3) entraîne une variation de hauteur des surfaces d'appui (10) par rapport à l'axe longitudinal du levier basculant (3) sur la surface en rampe (19).

4. Actionneur à levier basculant (1) selon la revendication 2 ou 3, **caractérisé en ce que** la paire de clavettes de réglage (9) peut être déplacée au moyen d'une broche de commande rotative (16) par rapport au levier basculant (3).

5. Actionneur à levier basculant (1) selon la revendication 4, **caractérisé en ce qu'**une roue d'entraînement (15) est disposée de manière solidaire en rotation sur la broche de commande (16) avec des renfoncements d'engagement (17) répartis angulairement uniformément sur la périphérie extérieure, lesquels sont prévus pour l'engagement rotatif avec des pattes d'actionnement (14) déplaçables axialement par rapport au levier basculant (3).

6. Actionneur à levier basculant (1) selon la revendication 5, **caractérisé en ce que** les pattes d'actionnement (14) sont disposées sur une tôle d'entraînement (13) déplaçable axialement par rapport au levier basculant (3) au moyen d'un entraînement (2), de sorte que le déplacement de la tôle d'entraînement (13) entraîne une rotation de la broche de commande (16).

7. Actionneur à levier basculant (1) selon la revendication 6, **caractérisé en ce que** la tôle d'entraînement (13) peut être actionnée au moyen de l'entraînement (2) jusqu'à une surcourse dépassant le mouvement de déplacement du galet de roulement (6) dans les deux sens de déplacement, et l'engagement de rotation des pattes d'actionnement (14) avec la roue d'entraînement (15) a lieu dans la région de la surcourse.

8. Actionneur à levier basculant (1) selon la revendication 6 ou 7, **caractérisé en ce que** des pattes d'actionnement (14) sont prévues sur la tôle d'entraînement (13) pour l'engagement de rotation avec la roue d'entraînement (15) en vue de provoquer une variation de hauteur positive et négative des surfaces d'appui (10) par rapport à l'axe longitudinal du levier basculant (3).

9. Actionneur à levier basculant (1) selon la revendication 4, **caractérisé en ce que** la broche de commande (16) présente un filetage extérieur autobloquant, **en ce qu'**une force d'actionnement de l'embrayage ne met pas en rotation la broche de commande (16) et la surface en rampe (19) est réalisée entre la paire de clavettes de réglage (9) et le levier basculant (3) sans autoblocage.

10. Actionneur à levier basculant (1) selon les revendications 3 et 4, **caractérisé en ce que** la surface en rampe (19) entre la paire de clavettes de réglage (9) et le levier basculant (3) est réalisée de manière autobloquante et la broche de réglage (16) peut être déplacée en vue d'une variation de hauteur des surfaces d'appui (10) dans les deux sens par rapport à l'axe longitudinal du levier basculant (3).

11. Procédé pour l'actionnement d'un embrayage d'un véhicule au moyen d'un actionneur à levier basculant (1) comprenant au moins un levier basculant (3) exerçant une force d'actionnement variable pour ouvrir et/ou fermer l'embrayage, lequel levier basculant peut être sollicité avec une force au moyen d'un ressort (8) et un point de rotation du levier basculant (3) peut être déplacé en déplaçant un galet de roulement (6), sur lequel le levier basculant (3) est supporté par le biais d'une came de levier basculant inclinée (7), **caractérisé en ce qu'**une variation due à l'usure du comportement force-déplacement de l'embrayage est compensée par une variation de la course d'actionnement d'un dispositif sollicitant l'embrayage.

12. Procédé selon la revendication 11, **caractérisé en ce qu'**un réglage d'un dispositif de compensation de l'usure des garnitures de l'embrayage est détecté au moyen d'un logiciel et les valeurs fournies sont comparées avec les valeurs limites consignées dans le logiciel.
